# FASCICULE DE BREVET EUROPEEN

(11) **EP 0 531 178 B1**
(45) Date de publication et mention de la délivrance du brevet: **12.06.1996**
(21) Numéro de dépôt: 92402108.2
(22) Date de dépôt: 22.07.1992
(51) Int. Cl.: F16D 65/56

(54) **Dispositif de rattrapage automatique de jeu pour un mécanisme de freinage**
Selbsttätige Nachstellvorrichtung für einen Bremsmechanismus
Automatic gap ajusting device for a brake mechanism

(30) Priorité: 05.09.1991 FR 9111129
(43) Date de publication de la demande: 10.03.1993
(73) Titulaire: ALLIEDSIGNAL EUROPE SERVICES TECHNIQUES, F-93700 Drancy (FR)
(72) Inventeur: Le Moigne, Daniel, F-49124 Le Plessis Grammoire (FR)
(74) Mandataire: Bentz, Jean-Paul

(56) Documents cités:
- EP-A- 0 003 452
- EP-A- 0 216 478
- FR-A- 1 540 199
- FR-A- 2 392 278
- FR-A- 2 551 819
- GB-A- 1 460 847
- US-A- 4 515 250

## Description

L'invention se rapporte à un dispositif de rattrapage automatique de jeu pouvant notamment équiper un frein à tambour du type de ceux qui comprennent une paire de segments en arc de cercle aptes à s'écarter l'un de l'autre sous l'action de moyens de commande au pied et/ou à main, et dans lequel ces segments sont sollicités l'un vers l'autre par un ressort de rappel, ce dispositif comprenant :
- une entretoise de longueur variable, sur laquelle les segments viennent en appui, et qui comporte elle-même une tige filetée se guidant dans une partie tubulaire et s'appuyant sur celle-ci par l'intermédiaire d'un pièce cylindrique, l'augmentation de longueur de l'entretoise étant obtenue par rotation de la pièce cylindrique et réalisant le rattrapage de jeu ; et
- un organe de commande entraîné en pivotement alternativement dans un premier sens, et dans un second sens inverse du premier, cet organe agissant sur la pièce cylindrique par l'intermédiaire d'un fil-ressort enroulé sur cette pièce, le pivotement de l'organe de commande dans le premier sens provoquant un resserrement du fil-ressort sur la pièce cylindrique et corrélativement l'entraînement de cette dernière par friction, tandis que le pivotement de l'organe de commande dans le second sens provoque le relâchement du fil-ressort et corrélativement son débrayage par rapport à la pièce cylindrique.

Un dispositif de ce type est par exemple décrit dans le brevet US 4 515 250.

Deux objectifs majeurs gouvernent, de façon générale, la conception de dispositifs de rattrapage automatique de jeu, à savoir la simplicité de réalisation et la fiabilité de fonctionnement.

La présente invention a pour but de proposer un dispositif nouveau propre à satisfaire ces deux objectifs, et y parvient en prévoyant que ledit organe de commande pivotant est un levier coudé à deux bras qui est articulé en sa zone coudée sur l'un desdits segments, l'un des bras du levier agissant sur le fil-ressort, ce bras présentant une fente dans laquelle s'engage l'une des extrémités du fil-ressort rabattue radialement vers l'extérieur, la fente s'étendant longitudinalement parallèlement à une direction axiale de la pièce cylindrique, ce qui autorise la translation axiale de cette dernière et l'autre bras du levier s'appuyant sur une des extrémités de ladite entretoise, et qu'un moyen élastique sollicite en permanence le levier coudé pour qu'il s'applique contre cette extrémité, la force dudit moyen élastique ne permettant pas de contrarier l'action dudit ressort de rappel mais étant suffisante pour entraîner la pièce cylindrique.

Ce dispositif peut comporter en outre des moyens thermosensibles aptes à réduire l'effort de serrage dudit fil-ressort sur la pièce cylindrique sous l'effet de la chaleur, assurant ainsi son débrayage automatique au-delà d'une certaine température.

Par exemple, les moyens thermosensibles comprennent un bilame sensiblement circulaire, mais non fermé, entourant à la fois ladite pièce cylindrique et ledit fil-ressort et dont les extrémités sont reliées aux extrémités du fil-ressort, de telle sorte qu'une élévation de température provoque le relâchement de ce dernier.

Selon un mode de réalisation avantageux, l'organe de commande pivotant est un levier coudé dont une extrémité présente une fente dans laquelle s'engage l'une des extrémités du fil-ressort rabattue radialement vers l'extérieur, la fente s'étendant longitudinalement parallèlement à une direction axiale (x-x') de la pièce cylindrique, ce qui autorise la translation axiale de cette dernière.

La fente en question est préférablement constituée par l'ouverture séparant les deux bords d'un bilame cintré porté par le levier coudé conformé de telle façon que la largeur de cette fente croît sous l'effet de la chaleur, ménageant ainsi dans la transmission du mouvement entre le levier et le fil-ressort un jeu qui est fonction croissante de la température.

D'autres caractéristiques et avantages de l'invention ressortiront clairement de la description qui-en est faite ci-après, à titre indicatif et nullement limitatif, en référence au dessin annexé, dans lequel :
- La Figure 1 est une vue de face d'un frein à tambour utilisant le dispositif de l'invention ;
- La Figure 2 est une vue en coupe faite suivant la ligne AA de la Figure 1 ;
- La Figure 3 est un agrandissement d'une partie de la Figure 1 ;
- La Figure 4 est une vue en coupe faite suivant la ligne BB de la Figure 1 ;
- La Figure 5 est une vue de détail d'une partie du dispositif ;
- La Figure 6 est une vue en coupe partielle du dispositif de l'invention ;
- La Figure 7 est une vue en coupe suivant la ligne DD de la Figure 6 ;
- La Figure 8 est analogue à la Figure 3 mais relative à un autre mode de réalisation ;
- La Figure 9 est analogue à la Figure 8 mais relative à un autre mode de réalisation ;
- La Figure 10 est une vue en coupe suivant la ligne EE de la Figure 9 , et
- Les Figures 11 à 13 illustrent un autre mode de réalisation du levier coudé utilisé dans le dispositif de l'invention .

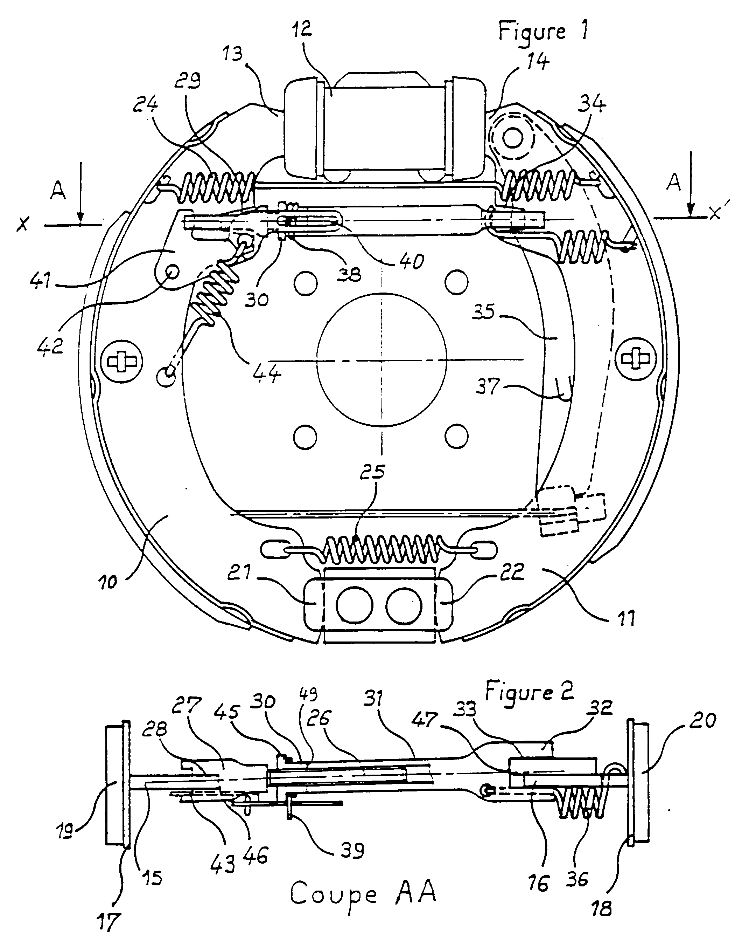

Le frein à tambour représenté par les Figures 1 et 2 comprend un support non représenté prévu pour être associé au support de roue du véhicule et sur lequel sont reçus de façon coulissante deux segments de frein 10 et 11. Des moyens d'écartement, constitués, dans le mode de réalisation représenté, par un cylindre de roue 12 sont disposés entre les deux premières extrémités 13 et 14 des segments qui comprennent une âme plane 15 et 16 et une jante 17 et 18 sur laquelle est fixée une garniture de friction 19 et 20 ; les deux autres extrémités 21 et 22 étant en appui contre un bloc d'ancrage 23 solidaire de la phase support.

Des ressorts de traction 24 et 25 disposés au voisinage du cylindre de roue 12 et du bloc d'ancrage 23 maintiennent respectivement les extrémités 13, 14 et 21, 22 contre le cylindre de roue et le bloc d'ancrage. Ce frein comprend en plus une entretoise qui placée entre les -segments est composée d'une tige filetée 26 aplatie à une extrémité 27 qui comporte une encoche en U 28 engagée dans une encoche 29 aménagée dans le segment 10, l'autre extrémité filetée recevant un écrou 30 et se guidant dans une pièce tubulaire 31 aplatie à une extrémité 32. Cette extrémité comporte une encoche en U 33 qui est engagée dans une encoche 34 aménagée dans le segment 11. Un ressort de traction 36 accroché d'une part à la pièce tubulaire et au segment 11 maintient ladite pièce tubulaire en appui contre le levier de frein à main 35 et la butée 37 dudit levier en appui sur l'âme du segment 11.

Sur l'écrou 30 est enroulé un fil-ressort 38 dont une extrémité est libre et l'autre 39 est engagée dans la fente 40 d'un des bras d'un levier coudé 41 comprenant deux bras et pivotant dans sa zone coudée sur un axe 42 solidaire du segment 10 et dont l'autre bras est maintenu dans une encoche 43 contre l'extrémité aplatie de la tige filetée 26 par un ressort de traction 44 accroché au bras du levier coudé portant la fente 40 et au segment portant l'axe 41.

Ce ressort de traction 44 est accroché sous l'âme 15 pour maintenir le bras portant la fente 40 du levier coudé contre la surface extérieure 45 de l'écrou 30.

Le frein décrit ci-dessus fonctionne de la manière suivante :

Au repos le ressort 24 sollicite l'un vers l'autre les segments contre les extrémités 46 et 47 de l'entretoise, par l'intermédiaire du frein à main 35 pour l'extrémité 47. Sous l'effet de la pression, le cylindre de roue écarte les extrémités 13 et 14 des segments de telle sorte que les garnitures de friction 19 et 20 viennent en contact avec le tambour. Simultanément l'extrémité aplatie de la tige filetée s'écarte du segment sous l'effet du ressort 44 qui agit par l'intermédiaire du levier coudé 41. Ledit levier, pivotant sur son axe 42, entraîne, si le jeu est insuffisant entre l'extrémité 39 du fil-ressort et les bords de la fente du levier coudé, par friction l'écrou 30 d'une fraction de tour par l'intermédiaire du fil-ressort 38 qui, dans ce sens de montage, se resserre sur l'écrou augmentant ainsi la longueur de l'entretoise et réalisant le rattrapage du jeu.

Lorsque cesse la pression dans le cylindre de roue, le ressort 24 rappelle les segments en appui contre les extrémités 46 et 47 de l'entretoise et simultanément l'extrémité aplatie de la tige filetée repousse le levier coudé qui pivote sur son axe dans le sens inverse du "retour" et entraîne par sa fente l'extrémité du fil-ressort qui, dans ce sens de montage, se relâche de l'écrou et tourne sur celui-ci. Ledit écrou est immobilisé en rotation dans le sens retour par le frottement de sa face 49 sur la pièce tubulaire. Dès que le jeu entre le tambour et les garnitures de friction autorise un débattement du levier coudé supérieur au jeu entre les bords de la fente du levier coudé et l'extrémité du fil-ressort, le fil-ressort entraîne l'écrou et rattrape ainsi le jeu au fur et à mesure de l'usure et ceci d'une manière pratiquement continue.

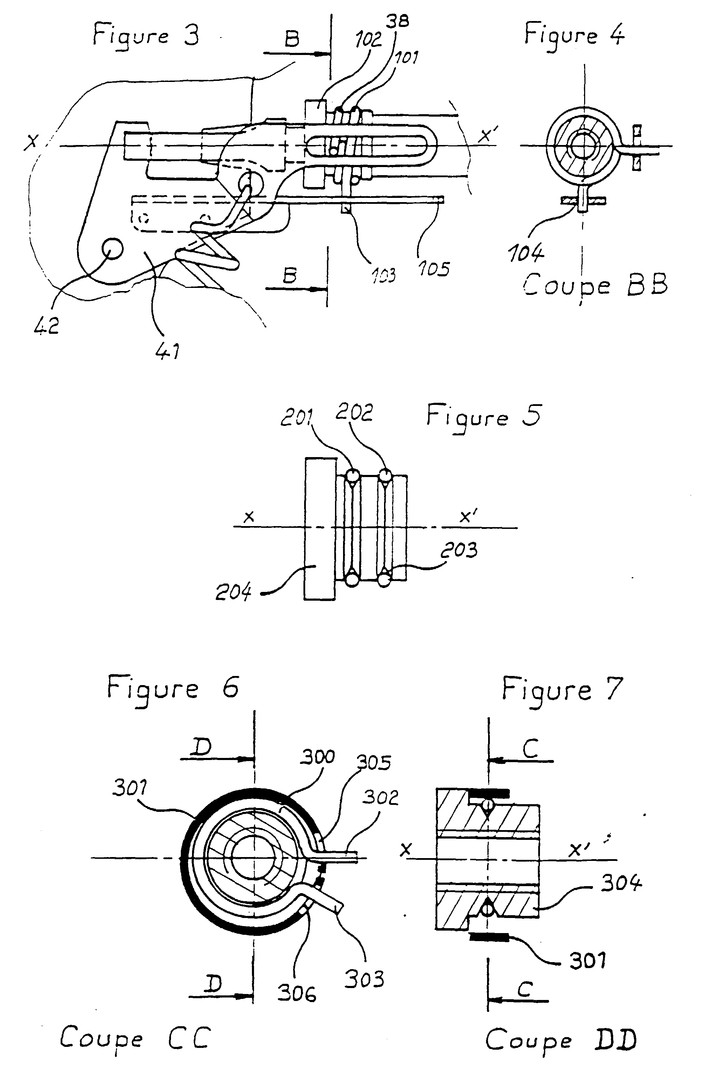

Dans un deuxième mode de réalisation représenté par les Figures 3 et 4, ce dispositif de rattrapage est équipé d'un moyen de blocage de l'écrou agissant dans le sens retour. Ce système comprend un second fil-ressort 101, dit anti-retour, enroulé autour de l'écrou 102 dont l'extrémité 103 est pratiquement maintenue sans jeu dans la fente 104 de la lame 105 solidaire du segment portant l'axe du levier coudé.

Dans le sens de montage retenu, le fil-ressort anti-retour 202 bloque l'écrou lorsque le levier coudé sollicite le fil-ressort dans le sens retour supprimant ainsi le risque de va-et-vient de l'écrou si le frottement de celui-ci sur la pièce tubulaire n'est pas suffisant.

Dans un troisième mode de réalisation représenté par la Figure 5, le fil-ressort 201 et le cas échéant le ressort anti-retour 202 s'engage(nt) dans une(des) gorge(s) de section en "V" 203 formée(s) dans la paroi de la pièce cylindrique 204 cet aménagement permet d'obtenir de très petits déplacements du ou des fils-ressorts sur la pièce cylindrique (0,03 mm) et par conséquent un réglage, en fonction du pas du filetage et du rapport de levier du levier coudé plus précis.

Dans un quatrième mode de réalisation représenté par les Figures 6 et 7, le dispositif de rattrapage est équipé d'un moyen thermosensible empêchant le réglage en cas de surchauffe du frein, surchauffe qui dilate le tambour et fait augmenter temporairement de façon anormale le jeu entre le tambour et les garnitures de friction.

Ledit moyen thermosensible est un bilame 301, non fermé, entourant la pièce cylindrique et le fil-ressort 300 dont les extrémités 302 et 303 rabattues radialement vers l'extérieur s'engagent dans des trous aménagés aux extrémités 305 et 306 dudit bilame.

Au-delà d'une température déterminée ledit bilame écarte les extrémités 302 et 303 du fil-ressort assurant ainsi son débrayage de l'écrou 304 et empêchant de ce fait l'entraînement dudit écrou ; dont le réglage pendant la période de surchauffe.

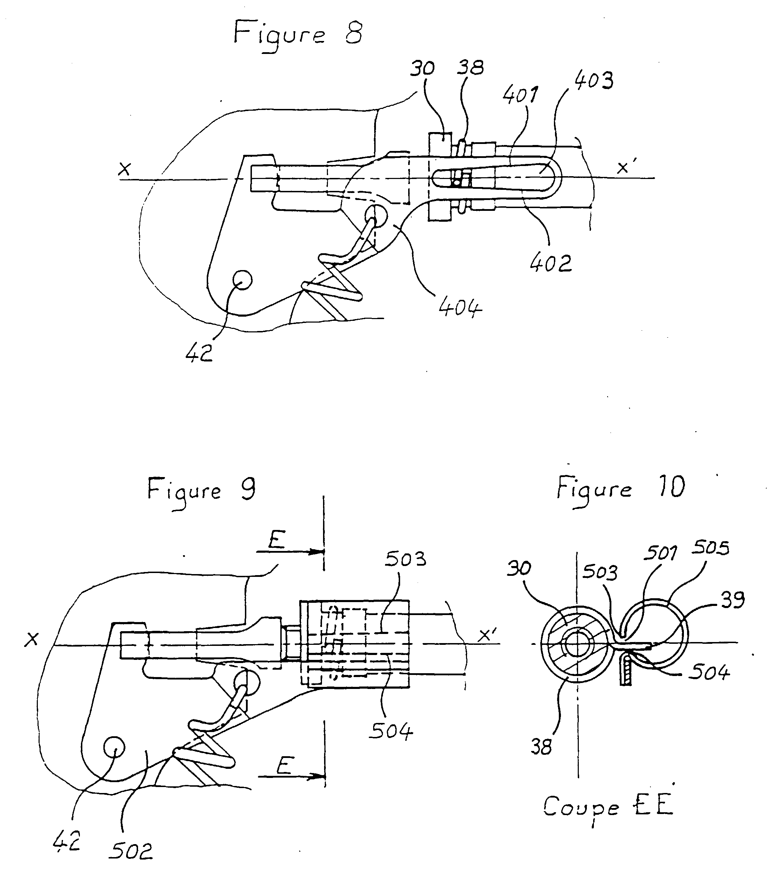

Dans un cinquième mode de réalisation représenté par la Figure 8, les bords 401 et 402 de la fente 403 du levier coudé 404 sont légèrement convergents du côté de l'axe de pivotement, assurant un jeu constant, entre les garnitures de friction et le tambour, pendant toute l'usure desdites garnitures de friction.

Dans un sixième mode de réalisation représenté par les Figures 9 et 10, la fente 501 du levier coudé 502 est constituée par l'ouverture séparant les deux bords 503 et 504 d'un bilame 505 cintré porté par le levier coudé et conformé de telle façon que la largeur de la fente croît sous l'effet de la chaleur et éventuellement ces bords peuvent être légèrement convergents suivant le sixième mode de réalisation.

Ce mode de réalisation ménage ainsi dans la transmission du mouvement entre le levier et le fil-ressort un jeu qui est fonction croissante de la température ambiante du frein évitant un sous-réglage, dû à une utilisation intensive prolongée, tout en permettant d'avoir un jeu pratiquement constant, entre les garnitures de friction et le tambour, pour une température donnée.

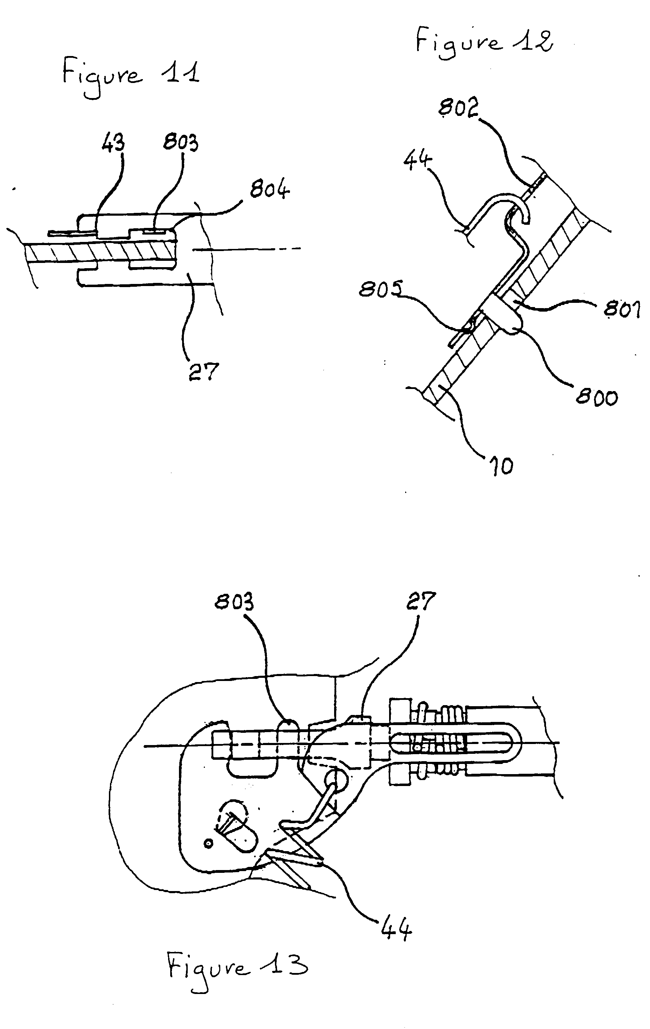

Dans un septième mode de réalisation, représenté aux Figures 11 à 13, l'axe 42 solidaire de l'âme du segment 10 est remplacé par une languette 800 découpée dans le levier 702 et rabattue à 90°. Celle-ci, en s'appuyant contre la surface de révolution d'un trou 701 percé dans l'âme, sert d'axe de pivotement au levier.

Un deuxième languette 803 aménagée dans le levier et engagée dans l'ouverture 804 de la vis 27 empêche le levier de s'écarter de l'âme sous l'action du ressort de traction 44.

Un plot embouti 805 dans le levier coudé limite la surface de contact de celui-ci sur l'âme.

Sollicité par le ressort, le levier coudé est maintenu en place par:
- la languette rabattue 800 engagée dans le trou 801 (ce trou peut être conformé pour limiter le débattement de l'axe de pivotement),
- le plot embouti 805 en appui sur l'âme.
- le bras du levier en appui sur l'extrémité 43 de la vis 27.
- la seconde languette 803 engagée dans l'ouverture 804 de la vis 27.

## Revendications

1. Dispositif de rattrapage automatique du jeu, notamment pour un frein à tambour du type de ceux qui comprennent une paire de segments (10, 11) en arc de cercle aptes à s'écarter l'un de l'autre sous l'action de moyens de commande (12) au pied et/ou à main, et dans lequel ces segments sont sollicités l'un vers l'autre par un ressort de rappel (24), ce dispositif comprenant :
- une entretoise de longueur variable, sur laquelle les segments viennent en appui, et qui comporte elle-même une tige filetée (26) se guidant dans une partie tubulaire (31) et s'appuyant sur celle-ci par l'intermédiaire d'un pièce cylindrique (30, 102, 204, 304), l'augmentation de longueur de l'entretoise étant obtenue par rotation de la pièce cylindrique et réalisant le rattrapage de jeu ; et
- un organe de commande (41, 404, 502) entraîné en pivotement alternativement dans -un premier sens, et dans un second sens inverse du premier, cet organe agissant sur la pièce cylindrique par l'intermédiaire d'un fil-ressort (38, 201, 300) enroulé sur cette pièce, le pivotement de l'organe de commande dans le premier sens provoquant un resserrement du fil-ressort sur la pièce cylindrique et corrélativement l'entraînement de cette dernière par friction, tandis que le pivotement de l'organe de commande dans le second sens provoque le relâchement du fil-ressort et corrélativement son débrayage par rapport à la pièce cylindrique,
caractérisé par le fait que ledit organe de commande pivotant est un levier coudé (41, 404, 502) à deux bras qui est articulé en sa zone coudée sur l'un desdits segments (10), l'un des bras du levier agissant sur le fil-ressort (38, 201, 300) ce bras présentant une fente (40, 403, 501, 612) dans laquelle s'engage l'une des extrémités (30, 302, 613) du fil-ressort (38, 300, 614) rabattue radialement vers l'extérieur, la fente s'étendant longitudinalement parallèlement à une direction axiale (X - X') de la pièce cylindrique, ce qui autorise la translation axiale de cette dernière, et l'autre bras du levier s'appuyant sur une des extrémités (43) de ladite entretoise, et en ce qu'un moyen élastique (44) sollicite en permanence le levier coudé pour qu'il s'applique contre cette extrémité, la force dudit moyen élastique ne permettant pas de contrarier l'action dudit ressort de rappel (24) mais étant suffisante pour entraîner la pièce cylindrique (30, 102, 204, 304).

2. Dispositif selon la revendication 1, caractérisé par le fait qu'il comporte des moyens thermosensibles aptes à réduire l'effort de serrage dudit fil-ressort sur la pièce cylindrique sous l'effet de la chaleur, assurant ainsi son débrayage automatique au-delà d'une certaine température.

3. Dispositif selon la revendication 2, caractérisé par le fait que lesdits moyens thermosensibles comprennent un bilame sensiblement circulaire (301), mais non fermé, entourant à la fois ladite pièce cylindrique (304) et ledit fil-ressort (300) et dont les extrémités (305) et (306) sont reliées aux extrémités (302) et 303) du fil-ressort, de telle sorte qu'une élévation de température provoque le relâchement de ce dernier.

4. Dispositif selon la revendication 1, caractérisé par le fait que les bords de ladite fente (501) sont légèrement convergents du côté de l'axe de pivotement du levier coudé (502).

5. Dispositif selon l'une des revendications 1 ou 4, caractérisé par le fait que ladite fente (501) est constituée par l'ouverture séparant les deux bords (503) et (504) d'un bilame (505) cintré porté par le levier coudé (502) conformé de telle façon que la largeur de cette fente croît sous l'effet de la chaleur, ménageant ainsi dans la transmission du mouvement entre le levier et le fil-ressort un jeu qui est fonction croissante de la température.

## Patentansprüche

1. Vorrichtung zur automatischen Spielbeseitigung, insbesondere für eine Trommelbremse, die ein Paar bogenförmige Backen (10, 11) enthält, die unter der Wirkung von Fuß- und/ oder Hand-Steuermitteln (12) voneinander entfernt werden können und bei der die Backen mittels einer Rückstellfeder (24) aufeinander zu beaufschlagt werden, wobei diese Vorrichtung enthält:
- ein Zwischenelement variabler Länge, an dem sich die Backen abstützen und das wiederum eine Gewindestange (26) enthält, die in einem rohrförmigen Abschnitt (31) geführt ist und sich an diesem mittels eines zylindrischen Teils (30, 102, 204, 304) abstützt, wobei die Längenzunahme des Zwischenelementes durch Drehung des zylindrischen Teils erhalten wird und die Spielbeseitigung realisiert; und
- ein Steuerorgan (41, 404, 502), das alternativ in einer ersten Richtung oder einer zur ersten Richtung entgegengesetzten zweiten Richtung verschwenkt wird, wobei dieses Organ auf das zylindrische Teil mittels eines Federdrahts (38, 201, 300) einwirkt, der um dieses Teil gewickelt ist, wobei das Verschwenken des Steuerorgans in der ersten Richtung ein Zusammenziehen des Federdrahts auf dem zylindrischen Teil und entsprechend das Antreiben des zylindrischen Teils durch Reibung hervorruft, während das Verschwenken des Steuerorgans in der zweiten Richtung das Lösen des Federdrahts und entsprechend sein Entkuppeln von dem zylindrischen Teil hervorruft,
dadurch gekennzeichnet, daß das verschwenkbare Steuerorgan ein gekrümmter Hebel (41, 404, 502) mit zwei Armen ist, der in dem Bereich der Krümmung an einer der Backen (10) angelenkt ist, wobei einer der Arme des Hebels auf den Federdraht (38, 201, 300) einwirkt, wobei dieser Arm einem Schlitz (40, 403, 501, 612) aufweist, in den ein Ende (30, 302, 613) des Federdrahts (38, 300, 614) eingreift, das radial nach außen abgebogen ist, wobei sich der Schlitz in Längsrichtung parallel zu einer axialen Richtung (X - X') des zylindrischen Teils erstreckt, was die axiale Translation dieses Teils ermöglicht, und wobei sich der andere Arm des Hebels an einem Ende (43) des Zwischenelementes abstützt, und daß ein elastisches Mittel (44) den gekrümmten Hebel permanent so beaufschlagt, daß er an diesem Ende anliegt, wobei die Kraft des elastischen Mittels die Wirkung der Rückstellfeder (24) nicht verhindern kann, jedoch ausreichend ist, um das zylindrische Teil (30, 102, 204, 304) anzutreiben.

2. Vorrichtung nach Anspruch 1, dadurch gekennzeichnet, daß sie wärmeempfindliche Mittel enthält, die in der Lage sind, die Kraft des Festziehens des Federdrahts auf dem zylindrischen Teil unter der Wirkung von Wärme zu vermindern, was auf diese Weise das automatische Entkoppeln des Federdrahts jenseits einer gewissen Temperatur gewährleistet.

3. Vorrichtung nach Anspruch 2, dadurch gekennzeichnet, daß die wärmeempfindlichen Mittel ein im wesentlichen kreisförmiges, jedoch nicht geschlossenes Bimetallteil (301) enthalten, welches sowohl das zylindrische Teil (304) als auch den Federdraht (300) umgibt und dessen Enden (305 und 306) mit den Enden (302 und 303) des Federdrahts verbunden sind, so daß ein Temperaturanstieg ein Lösen des Federdrahts hervorruft.

4. Vorrichtung nach Anspruch 1, dadurch gekennzeichnet, daß die Ränder des Schlitzes (501) geringfügig zur Seite der Schwenkachse des gekrümmten Hebels (502) konvergieren.

5. Vorrichtung nach einem der Ansprüche 1 oder 4, dadurch gekennzeichnet, daß der Schlitz (501) durch die Öffnung gebildet ist, welche die beiden Ränder (503 und 504) eines gekrümmten Bimetallteils (505) trennt, das von dem gekrümmten Hebel (502) getragen wird und so ausgebildet ist, daß die Breite dieses Schlitzes sich unter der Wirkung von Wärme erhöht, so daß in der Bewegungsübertragung zwischen dem Hebel und dem Federdraht ein mit der Temperatur ansteigendes Spiel erzeugt wird.

## Claims

1. Device for automatically taking up play, especially for a drum brake of the type of those comprising a pair of shoes (10, 11) in the shape of a circular arc capable of moving away from each other under the action of control means (12) by foot and/or by hand, and in which these shoes are stressed towards each other by a return spring (24), this device comprising:
- a strut of variable length, on which the shoes come to bear, and which itself comprises a threaded rod (26) being guided in a tubular part (31) and bearing on the latter by the intermediary of a cylindrical piece (30, 102, 204, 304), the increase in length of the strut being obtained by the rotation of the cylindrical piece and taking up the play; and
- a control member (41, 404, 502) driven pivotably alternately in a first direction and in a second direction opposite to the first, this member acting on the cylindrical piece by the intermediary of a spring-wire (38, 201, 300) rolled around this piece, the pivoting of the control member in the first direction engendering a tightening of the spring-wire on the cylindrical piece and correspondingly the driving of the latter by friction, whilst the pivoting of the control member in the second direction engenders the release of the spring-wire and correspondingly its disengagement with respect to the cylindrical piece,
characterized in that said pivoting control member is an elbowed lever (41, 404, 502), with two arms, which is articulated at its elbowed zone on one of said shoes (10), one of the arms of the lever acting on the spring-wire (38, 201, 300), this arm having a slit (40, 403, 501, 612) in which one of the ends (30, 302, 613) of the spring-wire (38, 300, 614) is engaged, which end is radially bent over towards the outside, the slit extending longitudinally in parallel with an axial direction (X - X') of the cylindrical piece, which allows the axial translation of the latter, and the other arm of the lever bearing on one of the ends (43) of said strut, and in that an elastic means (44) permanently stresses the elbowed lever so that it applies itself against this end, the force of said elastic means not permitting the action of said return spring (24) to be countered but being sufficient to drive the cylindrical piece (30, 102, 204, 304).

2. Device according to Claim 1, characterized in that it comprises thermosensitive means capable of reducing the tightening effort of said spring-wire on the cylindrical piece under the effect of heat, thus ensuring its automatic disengagement above a certain temperature.

3. Device according to Claim 2, characterized in that said thermosensitive means comprise a substantially circular, but not closed, bimetallic strip (301), surrounding both said cylindrical piece (304) and said spring-wire (300) and of which the ends (305) and (306) are connected to the ends (302) and (303) of the spring-wire, so that a rise in temperature engenders the release of the latter.

4. Device according to Claim 1, characterized in that the edges of said slit (501) are slightly convergent on the side of the pivoting axis of the elbowed lever (502).

5. Device according to any of Claims 1 or 4, characterized in that said slit (501) is constituted by the opening separating the two edges (503) and (504) of a curved bimetallic strip (505) carried by the elbowed lever (502) and shaped in such a fashion that the width of this slit increases under the effect of heat, thus providing, in the transmission of movement between the lever and the spring-wire, a play which is an increasing function of temperature.
